# EUROPEAN PATENT SPECIFICATION

(11) **EP 1 571 921 B1**
(45) Date of publication and mention of the grant of the patent: **05.03.2008**
(21) Application number: 03812174.5
(22) Date of filing: 01.12.2003
(51) Int. Cl.: A23L 1/0534, C08B 11/12, A23L 1/212, A23L 2/02

(54) **USE OF CARBOXYMETHYL CELLULOSE (CMC) IN FRUIT-BASED PRODUCTS**
VERWENDUNG VON CARBOXYMETHYLCELLULOSE (CMC)IN PRODUKTEN AUF FRUCHTGRUNDLAGE
UTILISATION DE CARBOXYMETHYLCELLULOSE (CMC) DANS DES PRODUITS A BASE DE FRUITS

(30) Priority: 04.12.2002 EP 02080138
(43) Date of publication of application: 14.09.2005
(73) Proprietor: Akzo Nobel N.V., 6824 BM Arnhem (NL)
(72) Inventor: THEEUWEN, Conrardus, Hubertus, Joseph, NL-6922 CE Duiven (NL); DIJK, Berend, Jan, NL-3831 PE Leusden (NL)
(74) Representative: Schalkwijk, Pieter Cornelis
(86) International application number: PCT/EP2003/013682
(87) International publication number: WO 2004/049823

(56) References cited:
- WO-A-03/003850
- DE-A- 19 746 264
- GB-A- 879 325
- GB-A- 1 485 112
- US-A- 3 418 133
- US-A- 3 947 604
- US-A- 5 397 588
- US-B1- 6 399 134
- PATENT ABSTRACTS OF JAPAN & JP 08 038076 A (DAI ICHI KOGYO SEIYAKU CO LTD), 13 February 1996 (1996-02-13) cited in the application
- SIKKEMA D J ET AL: "CARBOXYMETHYLCELLULOSE WITH XANTHAN GUM LIKE RHEOLOGY" MACROMOLECULES, AMERICAN CHEMICAL SOCIETY. EASTON, US, vol. 22, 1989, pages 364-366, XP002116799 ISSN: 0024-9297 cited in the application

## Description

The present invention relates to the use of carboxymethyl cellulose in fruit-based products.

Carboxymethyl cellulose (CMC), typically in the form of sodium carboxymethyl cellulose, is a well-known water-soluble polymer which is widely used in food products. Until now the use of conventional CMC in fruit-based products has been limited due to the slimy and sticky mouthfeel or insufficient gelling properties.

Several prior art documents disclose the use of conventional CMC in fruit-based products.

Japanese patent publication JP 080-38076 discloses the combined use of two kinds of CMC as thickener in jams. Of the two CMCs one has a low viscosity and the other has a relatively high viscosity of from 1,000 to 20,000 mPa.s for a 2 percent by weight (wt%) aqueous solution. The low-viscosity CMC serves to hold down water release, whereas the high-viscosity CMC is present to improve the gelling properties of the jam. Despite this improvement, the jams containing these CMCs still require an undesirably large total amount of CMC exceeding 1 wt%. These large amounts of CMC result in a very sticky mouthfeel of the jams.

In US 3,418,133 the use of a CMC in fruit-based products, such as orange flavoured spreads or fruit deserts, is described. Various CMCs are disclosed having a viscosity varying from about 10 mPa.s for a 2 % solution to 42,000 mPa.s for a 1% solution. All CMCs have a degree of substitution (DS) of between 0.1 and 0.6, which make them generally less suitable in aqueous media due to their relatively low solubility. It is further noted that US 3,418,133 discloses examples of fruit-based products in which a relatively large amount of CMC, i.e. exceeding about 3 wt%, is used. Use of such large amounts of CMC is undesirable. In low pH environments (i.e. acidic environments) typical for fruit-based products, the solubility of these CMCs is insufficient. Such undesirable incomplete dissolution of the CMC generally results in a sandy mouthfeel of the fruit-based product.

In the above-described prior art documents the CMCs described are not capable of forming a gel at a dosage level and conditions typical for this product.
As a result of the fact that conventionally used CMCs are not capable of forming a gel, nowadays other thickening agents such as pectin, guar or starch are preferred over CMC.

Hence, there is a need in the art for a CMC which can be used advantageously in fruit-based products and which does not have the disadvantages mentioned above.

The present invention relates to the use of a carboxymethyl cellulose (CMC) for preparing, fruit-based products, wherein the CMC is characterized by forming a gel at 25°C after high-shear dissolution in a 0.3 wt% aqueous sodium chloride solution, the final content of the CMC in the aqueous sodium chloride solution being 1 wt% for a CMC having a degree of polymerization (DP) of >4,000, 1.5 wt% for a CMC having a DP of >3,000-4,000, 2 wt% for a CMC having a DP of 1,500-3,000, and 4 wt% for a CMC having a DP of <1,500, the gel being a fluid having a storage modulus (G') which exceeds the loss modulus (G") over the entire frequency region of 0.01-10 Hz when measured on an oscillatory rheometer operating at a strain of 0.2.

The definition of a gel can also be given in terms of the loss angle, delta, which can be calculated from the formula: G"/G' = tan delta. The CMC to be used in accordance with the present invention has a delta smaller than 45°.

Apparatus for high-shear dissolution are known to a person of ordinary skill in the art. High-shear dissolution typically is achieved by using a Waring blender or Ultra-Turrax. These apparatus typically operate at approx. 10,000 rpm or more.

The use of a CMC in accordance with the present invention in fruit-based products unexpectedly leads *inter alia* to an improvement in gelling properties, flowing properties, consistency, and stability. By the use of these CMCs fluid loss or syneresis can be prevented. These CMCs furthermore are soluble in both hot and cold water. This is advantageous over e.g. pectin, as the CMC is dissolved without requiring additional heating, leading to a significant saving of energy and a reduction of costs related thereto.
At high temperatures the gelling properties remain unimpaired, avoiding flotation of fruit particles and resulting in a uniform distribution of fruit. A further advantage is that the use of CMCs according to the invention does not require a minimum level of soluble solids (e.g. sugar) as opposed to for example pectin. Consequently, the CMC according to the invention is suitable for use in fruit products which comprise a low amount of sugar or are even free of sugar.

In the context of the present product, the abbreviation CMC stands for carboxymethyl cellulose as well as for sodium carboxymethyl cellulose.
It is further appreciated that in fruit-based products various types of fruit, fruit pulp, fruit concentrate, fruit juice, dried fruit particles or synthetic fruity additives which taste or smell like fruit are used. In the context of the product, the term "fruit" refers to both fresh fruit and fruity additives, which are commonly known in the art.

The CMC to be used in accordance with the present invention can be obtained by the processes described by D.J. Sikkema and H. Janssen in Macromolecules, 1989, 22, 364-366, or by the process disclosed in WO 99/20657. The procedures and apparatus to be used are conventional in the art and variations on these known procedures can easily be made by a person skilled in the art using routine experimentation. In particular, we have found that the amount of water which is used in the process is an important parameter for obtaining the CMC in accordance with the present invention. Typically, a 20-40 wt% (final content) aqueous alkali metal hydroxide solution (e.g. aqueous sodium hydroxide solution) is used.

The characterization of CMCs depends mainly on rheology measurements, in particular viscosity measurements. See, e.g., J.G. Westra, Macromolecules, 1989, 22, 367-370. In this reference, the properties of the CMCs obtained via the process disclosed by Sikkema and Janssen in Macromolecules, 1988, 22, 364-366, are analyzed. Important properties of a CMC are its viscosity, thixotropy, and shear-thinning effect.

The rheology of aqueous CMC solutions is rather complex and depends on a number of parameters including the degree of polymerization (DP) of the cellulose, the degree of substitution (DS) of the carboxymethyl groups, and the uniformity or non-uniformity of substitution, i.e. the distribution of carboxymethyl groups over the cellulose polymer chains.

The degree of polymerization (DP) of the CMC to be used in accordance with the present invention can vary over a broad range. It is noted that with the term "degree of polymerization" a skilled person will understand that this term refers to the average degree of polymerization. In the context of the present invention, a distinction is made between the following DP ranges, i.e. >4,000, >3,000-4,000, 1,500-3,000, and <1,500. Typically, the CMC is prepared from linters cellulose (DP typically >4,000-7,000), wood cellulose (DP typically 1,500-4,000) or depolymerized wood cellulose (DP typically <1,500). Preferably, the DP of the CMC to be used in accordance with the present invention is from 1,500 to >4,000, more preferably >3,000, even more preferably >4,000. It is preferred that the CMC is prepared from linters cellulose.

The CMC to be used in accordance with the present invention typically has a DS of at least 0.6, preferably at least 0.7, and most preferably at least 0.8, and typically of at most 1.2, preferably at most 1.1, and most preferably at most 1.0.

The Brookfield viscosity (Brookfield LVF, spindle 4, 30 rpm, 25°C) is measured after high-shear dissolution, for example using a Waring blender, of the CMC of the present invention in a 0.3 wt% aqueous sodium chloride solution, the final content of the CMC in the aqueous sodium chloride solution being 1 wt% for a CMC having a degree of polymerization (DP) of >4,000, 1.5 wt% for a CMC having a DP of >3,000-4,000, 2 wt% for a CMC having a DP of 1,500-3,000, and 4 wt% for a CMC having a DP of <1,500. Preferably, a CMC having a viscosity of more than 9,000, more preferably of more than 9,500, even more preferably of more than 10,000 mPa.s, is used.

Aqueous solutions of the CMC to be used in accordance with the present invention are strongly thixotropic. The thixotropy can be determined by preparing a 1 wt% aqueous CMC solution and measuring the viscosity as a function of the shear rate (i.e. 0.01-300 s⁻¹) on a controlled rate or controlled stress rheometer in rotational mode at 25 °C using a cone-plate, parallel-plate or bob-cup geometry. An upcurve is recorded in which the shear rate is increased from 0.01 to 300 s⁻¹ in 3 minutes, immediately followed by the recording of a downcurve in which the shear rate is decreased over the same range and time. For a CMC in accordance with the present invention, the upcurve will be at a higher viscosity level than the downcurve and the area between the two curves is a measure for thixotropy, also referred to as the thixotropy area. Typically, one speaks of a thixotropic solution when the area has a value of 5 Pa.s.s⁻¹ or more when measured at 2 to 4 hours after preparation of the aqueous solution.

Without being bound by theory, it is believed that the above-mentioned rheological properties are due to the presence of poorly or non-substituted parts (i.e. hardly any or no carboxymethyl substitution on that part of the cellulose) and of significantly more highly substituted parts of the CMC according to the invention. The low or non-substituted parts interact with each other leading to the formation of a gel of the CMC according to the invention. The particular distribution of carboxymethyl groups over the CMC is encountered to a much smaller extent in conventional CMCs. For this reason conventional CMCs, which are not in accordance with the present invention, do not exhibit the rheological properties of the CMCs according to the invention.

The CMC of the present invention can be used in a wide variety of fruit-based products. Preferred fruit-based products are jams including low calory jams, fruit preserves, pie fillings, fruity sauces, fruity fillings in bakery products (such as cookies and cakes), fruit-based icings or toppings, jellies, sweets, and beverages comprising fruit including dairy-based and alcohol-containing drinks. Particularly preferred fruit-based products are jams and fruity sauces.

Any type of fruit known in the art is suitable for use in the present invention. Examples of such fruits are citrus fruit, apple, pear, blueberry, strawberry, cherry and exotic fruits such as passion fruit or mango.

We have found that it can be advantageous to use a CMC in accordance with the present invention in combination with another hydrocolloid having gelling or binding properties, such as pectin, carrageenan, starch, alginate, xanthan, konjac, locust bean gum, guar gum, or food protein, for example casseine, soja and gelatine. Also combination of a CMC in accordance with the invention and two or more of the hydrocolloids are envisaged. It is noted that some of these hydrocolloids are already applied as sole thickener in common fruit-based products. For example, in jams pectin, which is relatively expensive, is used. The pectin can be replaced partially or completely by the CMC in accordance with the present invention. As CMC is less expensive than pectin, the thickener will become cheaper. It is also envisaged to replace the pectin with a combination of CMC and another hydrocolloid. Combinations of the CMC of the invention and kappa-carrageenan or alginate are most preferred.

The CMC of the invention is capable of forming a gel in an acidic environment. Typically, the CMC is able to form a gel at a pH of at least 1, preferably at least 2, and most preferably at least 2.5, and a pH of at most 6, preferably at most 5, and most preferably at most 4.5. This property makes these CMCs suitable for fruit-based products, as these are generally acidic in nature.

Preferably, the CMC is gelated by exposing the CMC to a high shear (as described in the Examples). Applying a high shear improves the gelling properties of the CMC considerably.
The gelling properties of the CMC of the present invention can also be improved by a heat treatment. Preferably, the CMC is treated at 50°C or higher, more preferably at 60°C or higher and most preferably at 70°C or higher.

The amount of CMC to be used in accordance with the present invention varies and is dependent on the amount and the type of fruit, water, and other additives used for preparing a fruit-based product. Typically, an amount of at least 0.05 wt%, preferably at least 0.1 wt%, most preferably at least 0.2 wt%, and at most 2 wt%, preferably at most 1.5 wt%, most preferably 1 wt%, is used, based on the total weight of the fruit-based product. In general, we have found that compared to a CMC not in accordance with the present invention, less of a CMC in accordance with the present invention is required for preparing fruit-based products. The optimal amount of CMC to be used in accordance with the present invention can be determined by a person skilled in the art by routine experimentation using the above amounts and the Examples given below as guidance.

The CMC to be used in accordance with the present invention, if desired combined with other solid ingredients of the fruit-based product, typically is added as a dry powder, or as an aqueous solution.

Fruit-based products are prepared according to methods which are known in the art. The skilled person will understand that fruit-based products are prepared according to methods that are specific for each product.

The present invention is illustrated by the following Examples.

### EXAMPLES

### Materials

Akucell® AF 2985, Akucell® AF 3185, and Akucell® HF 300 (all ex Akzo Nobel) are CMCs which are not in accordance with the present invention.

CMC-1 and CMC-2 are CMCs which are in accordance with the present invention, i.e. they form a gel at 25°C when dissolved in an amount of 1 wt% under high shear in a 0.3 wt% aqueous sodium chloride solution.

CMC-1: Prepared from linters cellulose. DP of 6,500. DS of 0.85. A 1 wt% aqueous solution of this product has a Brookfield viscosity of 8,500 mPa.s using a Heidolph mixer at 2,000 rpm and of 8,000 mPa.s using a Waring blender at 10,000 rpm (i.e. high shear). CMC-1 has a pseudoplastic rheology and a tendency to thicken up in time, that is, it has a thixotropic rheology. A thixotropy area of 40 Pa.s.s⁻¹ was calculated using the method described hereinbelow.

CMC-2: Prepared from linters cellulose DP of 6,500. DS of 0.75. A 1 wt% aqueous solution of this product has a Brookfield viscosity of over 12,000 mPa.s using a Heidolph Mixer at 2,000 rpm and of well over 20,000 mPa.s using a Waring Blender at 10,000 rpm. (i.e. high shear). CMC-2 has a pseudoplastic rheology and a tendency to thicken up in time, that is, it has a strong thixotropic rheology. A thixotropic area of more than 250 Pa.s.s⁻¹ was calculated using the method described below. CMC-2 does not dissolve in a salt or acid solution under normal mixing conditions (i.e. propellor blade mixer at 2,000 rpm). At high shear (i.e. Waring Blender at over 10,000 rpm) CMC-2 only dissolves when low wt% of salt and/or acid are used.

### Rheology

CMC (final content 1 wt%) was dissolved under high shear in a 0.3 wt% aqueous sodium chloride solution using a Waring blender. After dissolution, the fluid or gel was brought to 25°C. The storage modulus (G') and the loss modulus (G") of the fluid were measured as a function of the oscillation frequency (i.e. 0.01-10 Hz) on a TA Instruments AR 1000 controlled stress rheometer operating at a strain of 0.2 (i.e. 20%) in oscillation mode using a 4°-cone-plate geometry at a temperature of 25°C.

### Viscosity

The viscosity of a 1 wt% aqueous solution of CMC was measured using a Brookfield LVF viscometer, spindle 4, 30 rpm, 25°C.

### Thixotropy

For determining the thixotropy, a 1 wt% aqueous CMC solution was prepared and the viscosity was measured as a function of the shear rate (i.e. 0.01-300 s⁻¹) on a controlled stress rheometer in rotational mode at 25°C using a cone-plate. An upcurve was recorded in which the shear rate was increased from 0.01 to 300 s⁻¹ in 3 minutes, immediately followed by the recording of a downcurve in which the shear rate was decreased over the same range and time. The measurement was carried out at 2 to 4 hours after preparation of the aqueous solution.

### Example 1

In Example 1, various strawberry jams were prepared with various thickeners. As thickeners were used Akucell® HF 300, Akucell® AF 2985, Akucell® AF 3185, Genu Pectin A (medium-rapid set), and Genu Pectin LM-105 AS (both pectins ex CP Kelco), which are not in accordance with the invention, and CMC-1 (which is in accordance with the invention). Also jams were made wherein pectin was mixed with either CMC-1 or Akucell® AF 2985, and used as thickener.
The jam was prepared by first mixing the thickener, citric acid, sodium benzoate, and three spoons of sugar. The dry mixture was subsequently sprinkled over the strawberries, which after the addition of water were heated and boiled for 1 minute. The remaining part of the sugar was added to the boiling mixture, and this boiling was continued until all the sugar was dissolved. After dissolving of the sugar the obtained jam was cooled.
Irrespective of the type of thickener used, the jam comprises 0.50 wt% thickener, 0.11 wt% citric acid, 0.02 wt% sodium benzoate, 41.92 wt% strawberries, 46.03 wt% sugar, and 11.42 wt% water.
In the Table below the different thickeners are presented with their corresponding ability to form a gel in the acidic environment of the jam and their flowing properties. The flowing properties are represented by a number from 1 to 5, where 1 represents a self-flowing substance and 5 represents a non-flowing substance. Further it is indicated in the Table whether the obtained jam reveals any flotation of fruit due to the high-temperature treatment.

**Table 1**

| Thickener | Get formation | Flowing Property | Flotation |
|---|---|---|---|
| Pectin LM-105 AS | + | 4.5 | Yes |
| Pectin A | + | 5 | Yes |
| H F 300 | - | 1 | Yes |
| AF 3185 | - | 2.5 | No |
| AF 2985 | - | 3 | No |
| CMC-1 | + | 4 | No |
| Pectin/CMC-1 (0.25 wt%/0.25 wt%) | + | 5 | No |

It is noted that the jams which contain pectin all reveal the formation of foam, which is undesirable. Foam formation is not encountered when only CMC is used as thickener. Table 1 shows that all thickeners except for Akucell® HF 300, Akucell® AF 2985 and Akucell® AF 3185 are capable of gel formation in the acidic environment of the jam. At the amount used, the jams with a (conventional) CMC thickener are self-flowing. The jam containing CMC-1 reveals almost the same gel property as the pectin-containing jam. Combination of pectin and conventional CMC-1 gives a flowing properties comparable to pectin itself. An advantage of CMC-based thickeners (in accordance with the invention) as compared to pectin is that they are more stable at higher temperatures and hence show no flotation of fruit. The fruit in the CMC-containing jam remains well-distributed throughout the jam, in contrast to the jam containing pectin.
It is further noted that the gel properties of the pectin-containing jam are not restored after deformation (i.e. when exposed to a high-shear stress), whereas the CMC-1 containing jam has unchanged gel properties after deformation. Jams formulated with pectin suffer from syneresis over time. This phenomenon does not occur in CMC-containing jams. Finally, it is noted that the addition of CMC to a jam does not have an adverse effect on the taste of the jam.

### Example 2

Pie fillings were prepared from preserved cherries on sugar syrup. For this experiment the cherries were separated from the syrup. The fillings were prepared with 300 g cherries, 300 g cherry juice, 80 g sugar, and various thickeners. When CMC-1 was applied as thickener, the amount was varied from 1.0 wt% to 1.75 wt%, based on the total weight of the pie filling. For comparison, pie fillings were made with Instant Clearjel E (a starch ex National Starch), Paselli BC (a starch ex Abebe), and Akucell® AF 2985. The amount of the thickeners in the pie filling, as well as their viscosity, is shown in Table 2.
It is noted that in this fruit-based product pectin is generally not used because pectin melts during a heating step. As a result a high amount of starch is used giving a less natural appearance and mouthfeel.
The pie fillings were prepared by first mixing sugar and the thickener to form a dry powder mix. This powder mix was added gradually to the syrup while the syrup was continuously stirred. After the mixture had been added completely, the obtained suspension was stirred for another 5 minutes, after which the cherries were added and the pie filling was obtained.
About 120 g of this pie filling were put on a plate. The filling was arranged in a circle having a diameter of about 10 cm. The plate with the pie filling was then heated in an oven at 220°C for 20 minutes. The diameter of the pie filling was again measured. An adequate pie filling should not flow during the baking step. Also the mass lost during the heating procedure was determined. The resulting diameters and mass losses are presented in the Table below.

**Table 2**

| Thickener | Conc. (%) | Viscosity (mPa.s) | Mass lost (%) | Diameter start (cm) | Diameter end (cm) |
|---|---|---|---|---|---|
| Clearjel E | 5.0 | 3,800 | 9.0 | 10 | 10.5 |
| Paselli BC | 5.0 | 5,800 | 11.7 | 10 | 11 |
| AF 2985 | 1.0 | 6,300 | 22.1 | 11 | 16 |
| AF 2985 | 1.5 | >20,000 | 11.0 | 10 | 13 |
| CMC-1 | 1.0 | 1,200 | 19.4 | 11 | 14 |
| CMC-1 | 1.25 | 6,700 | 18.6 | 11 | 13 |
| CMC-1 | 1.5 | >20,000 | 13.5 | 10 | 10.5 |
| CMC-1 | 1.75 | >20,000 | 11.0 | 10 | 10.5 |

In Table 2 it is shown that it is possible to prepare a pie filling without starch. Compared to starch, much less of CMC-1 is required to obtain a pie filling having a consistency similar to that of the pie fillings made with the starches Clearjel E and Paselli. Moreover, the 1.5 wt% and 1.75 wt% CMC-1-containing pie fillings show similar mass losses to the 5 wt% starch-containing fillings. It is also shown that the use of CMC-1 leads to a better consistency than the use of the conventional AF 2985, when applied in the same amount. It is further noted that none of the pie fillings treated at the applied temperature reveal any spattering of fluid.
The pie fillings prepared with starch have a turbid and flat appearance. In contrast, the fillings prepared with CMC have a more natural appearance, as they are transparent and shiny, and a better mouthfeel and taste.

### Example 3

In this Example several gels were prepared with CMC-1 and CMC-2 added as thickeners. These gels are suitable for use in fillings for cookies. Optionally, fruit, fruity flavors or other commonly known additives may be added to these fillings.
Solutions of CMC-1 and CMC-2 were prepared by dissolving 3 g of the CMC in 300 ml of demineralized water at room temperature while stirring vigourously using a Heidolph mixer. In this way, a 1 wt% CMC solution is obtained which is referred to as a low-shear solution of CMC. A high-shear CMC solution was obtained by additionally stirring the low-shear solution with a Waring blender for two minutes.
The pH of the solution was brought to about 3.4 ± 0.1 by adding 1.5 g of citric acid (0.5 wt%). The citric acid was dissolved either before or after dissolution of the CMC. Solutions were prepared with a Heidolph propellor mixer (low-shear method). Additionally solutions were treated with a Waring blender (high-shear method). This method results in four gels for each CMC of which the preparation procedure, the viscosity, and the consistency are presented in the Table below.

**Table 3**

| Gelling agent | Citric acid addition | Shear method | Viscosity (mPa.s) | Consistency |
|---|---|---|---|---|
| CMC-1 | Before | Low | 3,700 | Flowing |
| | After | Low | 8,650 | Gel |
| | Before | High | 11,200 | Gel |
| | After | High | 11,200 | Gel |
| | | | | |
| CMC-2 | Before | Low | 39 | Flowing |
| | After | Low | 5,200 | Weak gel |
| | Before | High | 2,300 | Flowing |
| | After | High | >20,000 | Strong gel |

From Table 3 it is clear that the addition of citric acid after the low- or high-shear treatment results in a gel with a higher viscosity, and hence better gelling properties. It is also shown that a high-shear treatment leads to a gel with better gelling properties than a low-shear treatment does.

### Example 4

In this Example, gels of CMC-1 and Kappa-carrageenan (ex Eurogum) were prepared by first dissolving CMC in cold water followed by dissolution of the carrageenan at 70°C. The gels were compared to a gel comprising pectin (Genu Pectin medium-rapid set), which was prepared at 90°C. After dissolution of the pectin sugar was added to an amount of 65 wt%, based on the total weight of the composition. The compositions of the prepared gels and their corresponding consistencies are presented in Table 4.

**Table 4**

| Gel | CMC-1 (%) | K-carrageenan (%) | Pectin (%) | Sugar (%) | Water (%) | Consistency |
|---|---|---|---|---|---|---|
| A | 0.25 | 0.25 | - | - | 99.5 | Rigid |
| B | 0.25 | 0.25 | - | 65 | 34.5 | Rigid |
| C | - | - | 0.5 | - | 99.5 | Fluid |
| D | - | - | 0.5 | 65 | 34.5 | Rigid |

The results show that CMC-1 in combination with Kappa-carrageenan forms a rigid gel irrespective of the sugar content. By contrast, pectin only forms a rigid gel in the presence of a very high amount of sugar.

## Claims

1. Use of a carboxymethyl cellulose (CMC) for preparing fruit-based products, wherein the CMC is **characterized by** forming a gel at 25°C after high-shear dissolution in a 0.3 wt% aqueous sodium chloride solution, the final content of the CMC in the aqueous sodium chloride solution being 1 wt% for a CMC having a degree of polymerization (DP) of >4,000, 1.5 wt% for a CMC having a DP of 3,000-4,000, 2 wt% for a CMC having a DP of 1,500-<3,000, and 4 wt% for a CMC having a DP of <1,500, the gel being a fluid having a storage modulus (G') which exceeds the loss modulus (G") over the entire frequency region of 0.01-10 Hz when measured on an oscillatory rheometer operating at a strain of 0.2 in oscillation mode using a 4°-cone plate geometry at a temperature of 25 °C..

2. Use according to claim 1, **characterized in that** the CMC has a Brookfield viscosity of more than 9,000 mPa.s after high-shear dissolution in a 0.3 wt% aqueous sodium chloride solution, the final content of the CMC in the aqueous sodium chloride solution being 1 wt% for a CMC having a degree of polymerization (DP) of >4,000, 1.5 wt% for a CMC having a DP of >3,000-4,000, 2 wt% for a CMC having a DP of 1,500-3,000, and 4 wt% for a CMC having a DP of <1,500.

3. Use according to claim 1 or 2, **characterized in that** the pH of the fruit-based product is between 1 and 6.

4. Use according to claim 1, 2 or 3, **characterized in that** the CMC has a DP of 1,500 or more.

5. Use according to claim 4, **characterized in that** the CMC is prepared from linters cellulose or wood cellulose.

6. Use according to any one of claims 1-5, **characterized in that** the CMC has a DS of 0.6 to 1.2.

7. Use according to any one of claims 1-6, **characterized in that** the fruit-based product is a jam, a fruit preserve, a pie filling, a fruity sauce, a fruity filling in bakery products, a fruit-based topping, a beverage comprising fruit, a jelly or a sweet.

8. Use according to any one of claims 1-6, **characterized in that** the CMC is used in combination with pectin, carrageenan, starch, alginate, xanthan, konjac, locust bean gum, guar gum, or food protein.

9. Use according to any one of claims 1-8, **characterized in that** the CMC is used in an amount of 0.05 to 1.5 wt%, based on the total weight of the fruit-based product.

## Patentansprüche

1. Verwendung einer Carboxymethylcellulose (CMC) zur Herstellung von Produkten auf Fruchtbasis, wobei die CMC **dadurch gekennzeichnet ist, dass** sie nach hochscherender Auflösung in einer 0,3-Gew.-%igen wässrigen Natriumchloridlösung bei 25 °C ein Gel bildet, wobei der Endgehalt der CMC in der wässrigen Natriumchloridlösung 1 Gew.-% für eine CMC mit einem Polymerisationsgrad (DP) von > 4000, 1,5 Gew.-% für eine CMC mit einem DP von 3000-4000, 2 Gew.-% für eine CMC mit einem DP von 1500-<3000 und 4 Gew.-% für eine CMC mit einem DP von < 1500 beträgt, wobei das Gel ein Fluid ist, das einen Speichermodul (G') aufweist, der den Verlustmodul (G") über den gesamten Frequenzbereich von 0,01-10 Hz übersteigt, wenn er mit einem bei einer Spannung von 0,2 betriebenen Oszillationsrheometer im Oszillationsmodus unter Verwendung einer 4°-Kegel-Platten-Geometrie bei einer Temperatur von 25 °C gemessen wird.

2. Verwendung gemäß Anspruch 1, **dadurch gekennzeichnet, dass** die CMC nach hochscherender Auflösung in einer 0,3-Gew.-%igen wässrigen Natriumchloridlösung eine Brookfield-Viskosität von mehr als 9000 mPa·s hat, wobei der Endgehalt der CMC in der wässrigen Natriumchloridlösung 1 Gew.-% für eine CMC mit einem Polymerisationsgrad (DP) von > 4000, 1,5 Gew.-% für eine CMC mit einem DP von > 3000-4000, 2 Gew.-% für eine CMC mit einem DP von 1500-3000 und 4 Gew.-% für eine CMC mit einem DP von < 1500 beträgt.

3. Verwendung gemäß Anspruch 1 oder 2, **dadurch gekennzeichnet, dass** der pH-Wert des Produkts auf Fruchtbasis zwischen 1 und 6 liegt.

4. Verwendung gemäß Anspruch 1, 2 oder 3, **dadurch gekennzeichnet, dass** die CMC einen DP von 1500 oder mehr hat.

5. Verwendung gemäß Anspruch 4, **dadurch gekennzeichnet, dass** die CMC aus Baumwoll-Linters-Zellstoff oder Holzzellstoff hergestellt wird.

6. Verwendung gemäß einem der Ansprüche 1 bis 5, **dadurch gekennzeichnet, dass** die CMC einen DS von 0,6 bis 1,2 hat.

7. Verwendung gemäß einem der Ansprüche 1 bis 6, **dadurch gekennzeichnet, dass** das Produkt auf Fruchtbasis eine Marmelade, Obstkonserve, Kuchenfüllung, ein Fruchtmus, eine fruchtige Füllung in Backwaren, eine Garnierung auf Fruchtbasis, ein fruchthaltiges Getränk, ein Gelee oder eine Süßigkeit ist.

8. Verwendung gemäß einem der Ansprüche 1 bis 6, **dadurch gekennzeichnet, dass** die CMC in Kombination mit Pectin, Carrageen, Stärke, Alginat, Xanthan, Konjak, Johannisbrotkernmehl, Guar-Gum oder Nahrungsprotein verwendet wird.

9. Verwendung gemäß einem der Ansprüche 1 bis 8, **dadurch gekennzeichnet, dass** die CMC in einer Menge von 0,05 bis 1,5 Gew.-% verwendet wird, bezogen auf das Gesamtgewicht des Produkts auf Fruchtbasis.

## Revendications

1. Utilisation d'une carboxyméthylcellulose (CMC) pour la préparation de produits à base de fruit, dans laquelle la CMC est **caractérisée par** la formation d'un gel à 25 °C après une dissolution sous fort cisaillement dans une solution aqueuse de chlorure de sodium à 0,3 % en poids, la teneur finale de la CMC dans la solution aqueuse de chlorure de sodium étant de 1 % en poids pour une CMC ayant un degré de polymérisation (DP) > 4000, de 1,5 % en poids pour une CMC ayant un DP de 3000 à 4000, de 2 % en poids pour une CMC ayant un DP de 1500 à < 3000, et de 4 % en poids pour une CMC ayant un DP < 1500, le gel étant un liquide ayant un module de stockage (G') supérieur au module de pertes (G") sur toute la plage de fréquences de 0,01 à 10 Hz lorsqu'ils sont mesurés sur un rhéomètre oscillatoire fonctionnant à une contrainte de 0,2 dans un mode d'oscillation en utilisant une géométrie en plan-cône de 4° à une température de 25 °C.

2. Utilisation selon la revendication 1, **caractérisée en ce que** la CMC a une viscosité de Brookfield de plus de 9000 mPa.s après une dissolution sous fort cisaillement dans une solution aqueuse de chlorure de sodium à 0,3 % en poids, la teneur finale de la CMC dans la solution aqueuse de chlorure de sodium étant de 1 % en poids pour une CMC ayant un degré de polymérisation (DP) > 4000, de 1,5 % en poids pour une CMC ayant un DP de > 3000 à 4000, de 2 % en poids pour une CMC ayant un DP de 1500 à 3000, et de 4 % en poids pour une CMC ayant un DP de < 1500.

3. Utilisation selon la revendication 1 ou 2, **caractérisée en ce que** le pH du produit à base de fruit est compris entre 1 et 6.

4. Utilisation selon la revendication 1, 2 ou 3, **caractérisée en ce que** la CMC a un DP de 1500 ou plus.

5. Utilisation selon la revendication 4, **caractérisée en ce que** la CMC est préparée à partir de cellulose de linters ou de cellulose de bois.

6. Utilisation selon l'une quelconque des revendications 1 à 5, **caractérisée en ce que** la CMC a un DS de 0,6 à 1,2.

7. Utilisation selon l'une quelconque des revendications 1 à 6, **caractérisée en ce que** le produit à base de fruit est une confiture, une compote, une garniture pour tarte, une sauce à base de fruit, une garniture à base de fruit pour les produits de boulangerie, un coulis à base de fruit, une boisson à base de fruit, une gelée ou un bonbon.

8. Utilisation selon l'une quelconque des revendications 1 à 6, **caractérisée en ce que** la CMC est utilisée en combinaison avec une pectine, une carraghénine, un amidon, un alginate, le xanthane, le konjac, la gomme de caroube, la gomme de guar, ou une protéine alimentaire.

9. Utilisation selon l'une quelconque des revendications 1 à 8, **caractérisée en ce que** la CMC est utilisée en une quantité de 0,05 à 1,5 % en poids, par rapport au poids total du produit à base de fruit.
